# EUROPÄISCHE PATENTANMELDUNG

(11) **EP 0 522 380 A1**
(43) Veröffentlichungstag der Anmeldung: **13.01.1993**
(21) Anmeldenummer: 92110891.6
(22) Anmeldetag: 26.06.1992
(51) Int. Cl.: B32B 27/32, F16L 9/12

(54) **Mehrschichtige Sauerstoffbarrierefolie, diese enthaltende Kunststoffrohre und Verwendung derselben**

(30) Priorität: 04.07.1991 DE 4122119
(71) Anmelder: HOECHST AKTIENGESELLSCHAFT, D-65926 Frankfurt am Main (DE)
(72) Erfinder: Rohrka, Heinz-Werner, W-6229 Kiedrich (DE); Müller, Rolf, W-6200 Wiesbaden (DE)

(57) **Zusammenfassung**

Die Erfindung betrifft eine mehrschichtige Sauerstoffbarrierefolie, umfassend eine keramisch beschichtete Trägerfolie, die ein- oder beidseitig mit einer Polyolefindeckschicht beschichtet ist, wobei das Polyolefin der Deckschicht ein Polyethylenpolymer, Polypropylenpolymer oder ein Polyethylen/Polypropylen-Copolymeres oder ein Polyethylen/Polypropylen/Polybutylen-Terpolymeres oder ein Blend der genannten Polyolefine ist, welches biaxial verstreckt ist, wobei die Molekulargewichtsverteilung dieses Polyolefins der Deckschicht eng ist und wobei das Polyolefin der Deckschicht eine geringe Oberflächenspannung aufweist.

## Beschreibung

Die Erfindung betrifft eine mehrschichtige Sauerstoffbarrierefolie sowie ein Kunststoffrohr, welches mit dieser Folie ummantelt ist, und die Verwendung solcher Kunststoffrohre als Heizungsrohre.

Das erfindungsgemäß ummantelte Kunststoffrohr findet insbesondere im Heizungssektor für Fußboden-Warmwasserheizungen Anwendung.

Neben Rohren aus Stahl oder Kupfer haben in den letzten Jahren Kunststoffrohre, insbesondere Rohre aus Polyolefinen, Bedeutung im Heizungsbau erlangt.

Kunststoffrohre haben jedoch den Nachteil, daß ihre Wandungen bereits bei Raumtemperatur eine unerwünscht hohe Durchlässigkeit für Sauerstoff besitzen. Die Sauerstoffdurchlässigkeit von Rohren, die beispielsweise aus Polyethylen hoher Dichte bestehen und eine Wandstärke von beispielsweise 2 mm haben, beträgt bei 23 °C ca. 3 cm³/(m Rohrlänge x Tag x bar). Das Rohr hat einen Außendurchmesser von 20 mm.

Über das in den Rohren des Heizsystems zirkulierende Heizwasser als Wärmeträger gelangt daher ständig Sauerstoff in den Heizkreislauf und damit in Kontakt mit Eisenteilen des Heizungssystems, beispielsweise dem Heizkessel oder Radiatoren. Die im Heizkreislauf befindlichen Eisenteile unterliegen daher der Korrosion; es besteht die Gefahr, daß sie nach einigen Jahren durch Korrosion unbrauchbar werden.

Um den genannten Nachteil von Kunststoffrohren zu beseitigen, ist vorgeschlagen worden, die in Heizsystemen verwendeten Kunststoffrohre mit einem Mantel zu umgeben, der aus einem Folienlaminat besteht, das aus einer Schicht aus streckorientierter Polyesterfolie als Trägermaterial, einer Aluminiumfolie als sauerstoffundurchlässige Sperrlage und einer Schicht aus Heißkleber besteht.

Die bekannte Mantelhülle hat jedoch den Nachteil, daß ihre Aluminiumschicht durch Dehnbeanspruchung beim Biegen des Rohres sowie durch Wärmeausdehnung nicht mehr hinreichend sauerstoffundurchlässig ist, da sie bei dieser mechanischen und thermischen Beanspruchung rissig wird.

In der GB-A-1 171 122 werden Plastikrohre beschrieben, die mit einer Metallfolie überzogen sind. Sie dienen dem Zweck, elektrische Kabel vor Korrosion durch Feuchtigkeit zu schützen. Auch die in dieser Druckschrift beschriebenen Rohre verlieren bei häufiger Erwärmung ihre Gassperreigenschaffen.

Ein gegen Gasdiffusion geschütztes Rohr aus Plastikmaterial ist bereits in der EP-A-0 030 091 beschrieben worden, die es sich zur Aufgabe gemacht hat, ein flexibles und gasdichtes Rohr zur Verwendung als Heizungsrohr zu schaffen, welches coextrudiert ist. Das Rohr umfaßt ein inneres, wasserdichtes Plastikmaterial und eine äußere gegen mechanische Beschädigung resistente Schicht, wobei zwischen beiden eine Zwischenschicht angeordnet ist, die eine Gasdiffusion verhindert und die sowohl mit der inneren als auch mit der äußeren Schicht verbunden ist. Die Gassperrschicht besteht aus Polyvinylalkohol, Polyacrylnitril oder Polyvinylidenchlorid.

In der EP-A-0 054 751 ist ein Kunststoffrohr beschrieben, welches für Sauerstoff praktisch undurchlässig ist und mechanisch und thermisch höher beanspruchbar ist als die obenerwähnten Rohre mit Metallfolie. Die in der EP-A-0 054 751 beschriebenen Rohre weisen einen mehrlagigen Mantel auf, der aus wenigstens einer siegelförmigen Schicht, beispielsweise aus Polyethylen, und einer Sperrschicht, beispielsweise aus biaxial streckorientierten Polyvinylalkohol-, Vinylalkohol/Ethylen-Copolymerisat- oder Polyacrylnitrilfolien, aufgebaut ist. Solche Rohre sind zwar mechanisch belastbar, ihre thermische Belastbarkeit ist jedoch noch nicht zufriedenstellend. So weisen sie bei einer Wassertemperatur oberhalb 60 °C eine zu große Sauerstoffpermeabilität auf.

Der Erfindung lag daher die Aufgabe zugrunde, ein Mantelmaterial für Kunststoffrohre zur Verfügung zu stellen, welches bei Temperaturen oberhalb 60 °C, insbesondere bis zu 90 °C, dehnfähig, also mechanisch belastbar und für Sauerstoff praktisch undurchlässig ist. Außerdem soll das Material gute Siegeleigenschaften aufweisen, da der Mantel durch Heißsiegelung fest mit dem Kunststoffrohr verbunden werden soll.

Das Mantelmaterial soll bei Raumtemperatur mindestens 40 %, vorteilhaft mehr als 100 %, dehnbar sein sowie auch im gedehnten Zustand praktisch undurchlässig für Sauerstoff sein.

Gelöst wird diese Aufgabe durch eine mehrschichtige Sauerstoffbarrierefolie, umfassend eine keramisch beschichtete Trägerfolie, die ein- oder beidseitig mit einer Polyolefindeckschicht beschichtet ist, wobei das Polyolefin der Deckschicht ein Polyethylenpolymer, Polypropylenpolymer oder ein Polyethylen/Polypropylen-Copolymeres oder ein Polyethylen/Polypropylen/Polybutylen-Terpolymeres oder ein Blend der genannten Polyolefine ist, wobei die Molekulargewichtsverteilung dieses Polyolefins der Deckschicht eng ist und wobei das Polyolefin der Deckschicht eine geringe Oberflächenspannung aufweist.

Die Trägerfolie hat eine Gesamtdicke von 8 bis 50 µm, bevorzugt hat sie eine Dicke im Bereich von 10 bis 20 µm, insbesondere 12 µm.

Die keramisch beschichtete Trägerfolie besitzt einen Permeationswert für Sauerstoff, der nicht mehr als 2 cm³/(m² x Tag x bar) bei 20 °C und einer relativen Luftfeuchte von 100 % beträgt. Ein ummanteltes Rohr mit einem Durchmesser von 20 mm, dessen Trägerfolie durch den angegebenen Permeationswert für Sauerstoff charakterisiert ist, hat eine Sauerstoffdurchlässigkeit von nicht mehr als 0,1 cm³/(m Rohrlänge x Tag x bar).

Die Trägerfolie besteht beispielsweise aus synthetischem thermoplastischem Kunststoff, ausgewählt aus einer Gruppe, umfassend Polyamide, Polypropylen, Polyethylenterephthalat und Vinylalkohol-Ethylen-Copolymerisate, die zu mengenmäßig geringem Anteil (20-40 %) aus copolymerisiertem Ethylen bestehen. Besonders geeignet ist Polyethylenterephthalat. Bevorzugt ist die Trägerfolie biaxial orientiert.

Die Trägerfolie weist eine keramische Beschichtung auf, die bevorzugt aus Silicium- und/oder Aluminiumoxiden mit wechselndem Sauerstoffgehalt besteht. So können beispielsweise Siliciumoxide der Formel SiOₓ mit x = 1,2 bis 2, insbesondere x = 1,5 bis 1,8, oder Aluminiumoxide der Formel Al₂Oy mit y = 2 bis 3, insbesondere y = 2,5 bis 2,8, oder Mischungen dieser Oxide eingesetzt werden. Bevorzugt werden SiOₓ-beschichtete Filme eingesetzt. Die Oxide können auf die Trägerfolie beispielsweise durch Plasmapolymerisation, Sputtern, thermische Verdampfung oder Elektronenstrahlbedampfung von Al und/oder SiO aufgebracht werden. Der Sauerstoffgehalt in den Oxiden kann beispielsweise durch spezielle Einstellung eines Sauerstoffpartialdrucks bei der Beschichtung variiert werden. Die Schichtdicke des keramischen Materials auf der Trägerfolie beträgt vorzugsweise 10 bis 1 000 nm. Die Gesamtdicke der beschichteten Trägerfolie beträgt 8 bis 50 µm, bevorzugt 10 bis 20 µm, insbesondere 10 bis 14 µm. Die Beschichtungstechniken sind bekannt und beispielsweise beschrieben in "Electron Beam Coating of High Barrier Layers on Plastic Films", T.G. Krug et al., Leybold AG, Hanau, DE, presented on Barrier Pack Conference, London, GB, 21./22.05.1990, oder "Transparent Gas Barrier Technologies", J.T. Felts, Airco Coating Technology, Concord CA, USA, presented at Society of Vacuum Coaters Annual Meeting, New Orleans, USA, 02.-04.05.1990. Beschichtete Filme, insbesondere solche auf SiOₓ-Basis sind aber auch direkt im Handel erhältlich und können beispielsweise bezogen werden von Toyo Inc., Japan; Mitsui Kasei, Japan, oder 4P, Deutschland.

Überraschend wurde festgestellt, daß die Sauerstoffpermeabilität bei keramisch beschichteten Trägerfolien auf niedrigem Niveau konstant bleibt (bei steigender Temperatur), wenn als Trägerfolie anstatt einer unverstreckten eine biaxial verstreckte Folie eingesetzt wird. Bei Verwendung einer unverstreckten Trägerfolie nimmt die O₂-Permeabilität mit steigender Temperatur weiter zu. Aus diesem Grund werden die biaxial orientierten Trägerfolien bevorzugt.

Die zweite, später unmittelbar an die Umfangsfläche des Kunststoffrohres angrenzende Deckschicht der Barrierefolie besteht aus einem siegelfähigen Polymerisat, beispielsweise aus Polyolefin. Als geeignet haben sich Polyethylenpolymerisate (LDPE, LLDPE, HDPE) sowie Polyethylen/Polypropylen-Copolymerisate und Polyethylen/Polypropylen/Polybutylen-Terpolymerisate, aber auch Blends der vorgenannten Co- und Terpolymerisate erwiesen. Als äußerst zweckmäßig hat es sich erwiesen, wenn diese als Deckschicht eingesetzten Polyolefine eine geringe Oberflächenspannung aufweisen. Als zweckmäßig haben sich Oberflächenspannungen von < 31 mN/m erwiesen, insbesondere 28 bis 30 mN/m. Des weiteren hat es sich als günstig erwiesen, wenn man die Deckschicht mit einem Antioxidans und einem Hitzestabilisator ausrüstet. Für diesen Zweck kann beispielsweise Pentaerythrityl-tetrakis-[3-(3,5-di-tert.-butyl-4-hydroxyphenyl)-propionat] eingesetzt werden. Die wirksame Menge dieser Antioxidationsmittel und/oder Hitzestabilisatoren beträgt jeweils 100 bis 1 000, bevorzugt 250 bis 750 ppm, bezogen auf die Masse des eingesetzten Polyolefins. Weiterhin hat es sich als vorteilhaft erwiesen, wenn das eingesetzte Polyolefin eine enge Molmassenverteilung bei gleichzeitig niedrigem Polymerisationsgrad aufweist. Der Polymerisationsgrad sollte 35 000 nicht überschreiten und bevorzugt im Bereich von 3 000 bis 30 000 liegen, insbesondere im Bereich von 3 500 bis 25 000. Die Molmassenverteilung sollte derart sein, daß mindestens 60 %, bevorzugt 70 bis 95 %, insbesondere 80 bis 99 %, der Gesamtmasse des Polyolefins eine Molmasse von 80000 bis 1 000 000 g/mol, bevorzugt 150 000 bis 750 000 g/mol, besitzen. Deckschichten mit sowohl geringer Oberflächenspannung als auch mit enger Molekulargewichtsverteilung bei gleichzeitig niedrigem Polymerisationsgrad haben sich als besonders gute Deckschichten für die keramisch beschichteten Trägerfolien erwiesen. Sie zeichnen sich durch gute Siegeleigenschaften bei gleichzeitig niedriger O₂-Permeabilität aus.

Die Trägerfolie kann sowohl einseitig als auch beidseitig mit der Deckschicht versehen werden. Dabei wird entweder nach dem Kaschierungsverfahren oder nach dem Extrusionskaschierverfahren vorgegangen. Bei dem Kaschierungsverfahren wird die Deckschichtfolie ein- oder beidseitig auf die keramisch beschichtete Trägerfolie aufkaschiert, während bei der Extrusionskaschierung eine der Zusammensetzung der Deckschicht entsprechende Schmelze kontinuierlich auf die Trägerfolie aufgetragen wird. Beide Verfahren sind bekannt. Als besonders zweckmäßig hat es sich erwiesen, wenn zwischen Trägerfolie und Deckschichteine zusätzliche haftvermittelnde Schicht, beispielsweise ein Primer auf Polyurethanbasis oder ein Klebstoff, eingeführt wird. Diese haftvermittelnde Schicht kann vor dem Zusammenführen von Träger- und Deckschicht(en) auf eine dieser Schichten aufgetragen werden. Bei einem Zweikomponentenkleber kann eine Komponente auf die Träger-, die andere auf die Deckschicht aufgetragen werden. Die haftvermittelnde Schicht hat eine Dicke, die im Vergleich zur Dicke der Trägerfolie bzw. der Deckschicht vernachlässigbar gering ist.

Die Dicke der jeweiligen siegelfähigen Deckschicht beträgt bevorzugt 10 bis 50 µm. Die Siegelschicht ist später mit der Umfangsfläche des Kunststoffrohres durch Siegelung fest verbunden.

Der das Kunststoffrohr umgebende Mantel, der aus der erfindungsgemäßen mehrschichtigen O₂-Barrierefolie besteht, ist in Form und Abmessung seines Querschnitts der Form und Abmessung des Kunststoffrohres angepaßt, das er umhüllt.

Gemäß einer ersten Erfindungsvariante bildet der Rohrmantel einen Hohlzylinderkörper, der aus einem rechteckigen Folienlaminat der mehrschichtigen O₂-Barrierefolie zugeschnitten ist. Der Hohlzylinderkörper besitzt einen geraden längsaxialen Schlitz in Form einer längsaxialen Zone, im Bereich welcher Seitenrandbereiche des den Hohlkörper bildenden Folienzuschnitts überlappen, wobei die Ränder der überlappenden Seitenrandbereiche parallel und im Abstand zueinander verlaufen.

Der Hohlzylinderkörper kann um das Rohr dadurch gebildet werden, daß man einen rechteckigen Folienlaminatzuschnitt der O₂-Barrierefolie um seine Längsachse als Biegelinie um das Rohr unter Bildung des wie angegeben ausgebildeten Mantels bildet.

Der aus der O₂-Barrierefolie bestehende Mantel der genannten raumförmlichen Ausbildung umgibt die Rohrumfangsfläche derart, daß die siegelfähige Deckschicht unmittelbar an diese angrenzt. Mantel und Rohrumfangsfläche sind im Grenzflächenbereich durch Versiegelung vollflächig oder in bestimmten Abständen miteinander verbunden.

Im Überlappungsbereich des Mantels sind die Mantelteile im Grenzflächenbereich zwischen siegelfähiger Deckschicht und Trägerfolie oder - sofern die erfindungsgemäße Folie auf beiden Seiten der Trägerfolie mit siegelfähigen Deckschichten versehen ist - zwischen den beiden siegelfähigen Deckschichten durch Versiegelung miteinander verbunden.

Zur Herstellung eines wie angegeben ummantelten Rohres bestimmter Länge geht man von einem rechteckigen Folienlaminatzuschnitt der O₂-Barrierefolie aus, dessen Länge der Länge des zu ummantelnden Rohres angepaßt und dessen Breite größer als der Rohrumfang ist. Der Zuschnitt wird dann derart um seine Längsachse als Biegelinie um das zu ummantelnde Rohr gebogen, daß aus dem Zuschnitt ein Hohlzylinderkörper entsteht, der einen geraden, längsaxialen Schlitz in Form einer längsaxialen Zone besitzt, im Bereich welcher Seitenrandbereiche des den Hohlkörper bildenden Zuschnitts überlappen, wobei dessen Seitenränder parallel und abständig zueinander verlaufen. Die Anordnung des Hohlzylinderkörpers um das Rohr erfolgt dabei in der Weise, daß die siegelfähige Deckschicht des diesen bildenden Folienlaminatzuschnitts der Rohrumfangsfläche zugewandt ist und unmittelbar an diese angrenzt. Der Mantel wird dann mit Wärme einer Temperatur von beispielsweise 150 °C beaufschlagt, die ausreicht, die siegelfähige Deckschicht derart zu aktivieren, daß sie zur Verklebung des Mantels mit dem Rohr führt. Der Mantel wird dann unter leichtem Preßdruck an den Rohrumfang angepreßt und dann auf Raumtemperatur abgekühlt. Nach Abkühlung des Mantels besteht zwischen diesem und dem Rohr eine feste Siegelverbindung.

Der Überlappungsbereich des Mantels hat bei Verwendung einer Folie mit beidseitiger Siegelschicht - von außen nach innen betrachtet - folgenden Aufbau:
Siegelschicht/keramisch beschichtete Trägerfolie/Siegelschicht-Siegelschicht/keramisch beschichtete Trägerfolie/Siegelschicht; letztere grenzt an die Rohrumfangsfläche an.

Die Siegelverbindung im Überlappungsbereich des Mantels erfolgt in der Grenzfläche zwischen zwei siegelfähigen Deckschichten.

In einer zweiten Erfindungsvariante kann das ummantelte Rohr derart ausgebildet sein, daß der Mantel aus einem spiralig überlappend gewickelten Folienstreifen besteht, der dem Rohrumfang unter Wickelspannung anliegt. Der Aufbau des Folienstreifens entspricht beispielsweise dem Aufbau des zur Ausbildung der ersten Erfindungsvariante verwendeten dreilagigen Folienlaminats.

Das Folienband wird spiralig derart um den gesamten Umfang des Rohres über dessen gesamte Länge gewickelt, daß die siegelfähige Schicht des Folienbandes an die Rohrumfangsfläche angrenzt.

Der gewickelte, durch Wickelspannung an die Rohroberfläche angepaßte Mantel wird dann mit Wärme und vorteilhaft zusätzlich mit Druck beaufschlagt und danach auf Raumtemperatur abgekühlt.

Ein aus vernetztem Polyethylen bestehendes Kunststoffrohr mit einem Außendurchmesser von 20 mm und einer Wanddicke von 2 mm hat bei 50 °C eine Sauerstoffdurchlässigkeit von 7,5 cm³/(m Rohrlänge x Tag x bar).

Ein derartiges Kunststoffrohr hat, wenn es erfindungsgemäß von einem Mantel umgeben ist, der eine beispielsweise 12 µm dicke Sperrlage aus keramisch beschichteter Polyethylenterephthalatfolie umfaßt, eine Durchlässigkeit für Sauerstoff von 0,02 cm³/(m Rohrlänge x Tag x bar).

Im letztgenannten Fall ist unter Sauerstoffdurchlässigkeit diejenige Menge Sauerstoff zu verstehen, die unter den genannten Bedingungen durch die Ummantelung und die Rohrwand in den Rohrhohlraum einzudringen vermag.

Die Messungen wurden jeweils bei einer relativen Feuchte von 25 % unter sonst vergleichbaren Versuchsbedingungen durchgeführt.
Zur Beurteilung der Temperaturbeständigkeit wurde die Folie mehrere Monate bei 90 °C im Wärmeschrank gelagert. Nach der Lagerung wurde dann die O₂-Permeabilität sowie das Zug/Dehnungsverhalten gemessen und die Folie optisch beurteilt.

Die zwei Figuren umfassende Zeichnung soll die Erfindung beispielhaft erläutern.

In der Figur 1 ist im Querschnitt und in schematischer perspektivischer Darstellung ein Rohr gemäß der erläuterten ersten Erfindungsvariante dargestellt.

Figur 2 zeigt in schematischer und halbperspektivischer Darstellung und vergrößert einen Ausschnitt A aus Figur 1. Die Elemente des in Figur 2 gezeigten ummantelten Rohres sind nicht maßstäblich dargestellt.

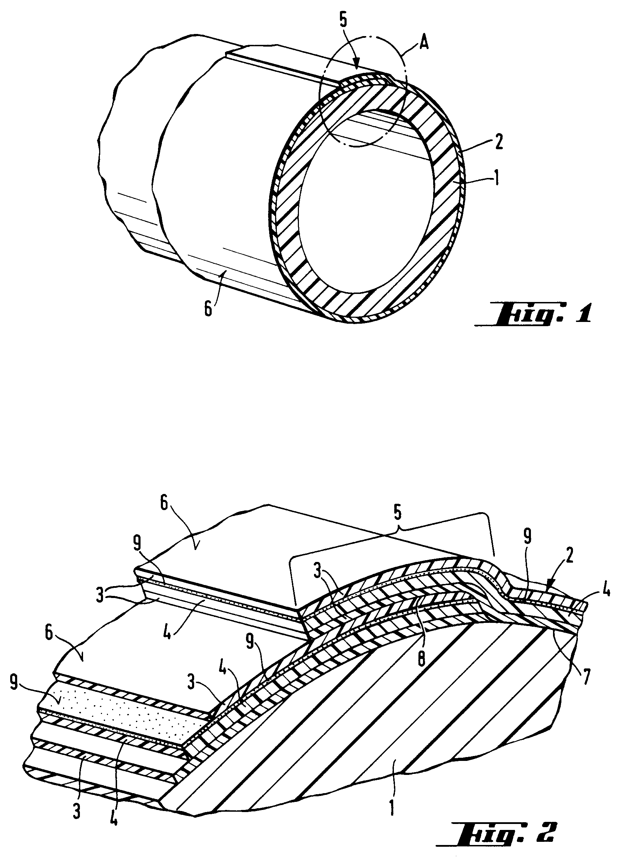

In der Figur 1 bedeutet (1) das Kunststoffrohr und (2) den Rohrmantel (die erfindungsgemäße mehrschichtige O₂-Barrierefolie) in seiner Gesamtheit. Die bauliche Ausbildung des Mantels ist in Figur 1 aus Gründen zeichnerischer Vereinfachung nicht dargestellt. Sie wird in Figur 2 gezeigt, wobei diese den Ausschnitt A aus Figur 1 vergrößert dargestellt wiedergibt.

In der Figur 2 haben die Ziffern (1) und (2) dieselbe Bedeutung wie in Figur 1. Es ist (3) die siegelfähige Deckschicht des Rohrmantels, und (4) ist die keramisch beschichtete Trägerfolie des Mantels, (9) ist die Keramikschicht, (5) ist die Überlappungszone des Mantels, (6) die Mantelaußenseite, (7) die Grenzfläche zwischen Mantel und Kunststoffrohr (1), im Bereich welcher Mantel und Rohr durch Versiegelung miteinander verbunden sind. (8) ist die Grenzfläche (Überlappungszone) im Überlappungsteil (5) des Mantels; im Bereich der Grenzfläche (8) des Überlappungsteils sind die sich überlappenden Mantelteile (die beiden siegelfähigen Deckschichten (3)) durch Versiegelung miteinander verbunden.

## Patentansprüche

1. Mehrschichtige Sauerstoffbarrierefolie, umfassend eine keramisch beschichtete Trägerfolie, die ein- oder beidseitig mit einer Polyolefindeckschicht beschichtet ist, wobei das Polyolefin der Deckschicht ein Polyethylenpolymer, Polypropylenpolymer oder ein Polyethylen/Polypropylen-Copolymeres oder ein Polyethylen/Polypropylen/Polybutylen-Terpolymeres oder ein Blend der genannten Polyolefine ist, wobei die Molekulargewichtsverteilung dieses Polyolefins der Deckschicht eng ist und wobei das Polyolefin der Deckschicht eine geringe Oberflächenspannung aufweist.

2. Mehrschichtige Sauerstoffbarrierefolie nach Anspruch 1, dadurch gekennzeichnet, daß die Trägerfolie eine biaxial verstreckte Polyamid-, Polypropylen-, Polyethylenterephthalat-, Polyethylenvinylalkoholfolie ist.

3. Mehrschichtige Sauerstoffbarrierefolie nach Anspruch 1 oder 2, dadurch gekennzeichnet, daß die keramisch beschichtete Trägerfolie als keramisches Material eine Verbindung der Formel SiOₓ mit x = 1,2 bis 2 und/oder eine Verbindung der Formel Al₂O_{y} mit y = 2 bis 3 enthält.

4. Mehrschichtige Sauerstoffbarrierefolie nach einem oder mehreren der Ansprüche 1 bis 3, dadurch gekennzeichnet, daß die Keramikschicht auf der Trägerfolie eine Schichtdicke von 10 bis 1 000 nm aufweist.

5. Mehrschichtige Sauerstoffbarrierefolie nach einem oder mehreren der Ansprüche 1 bis 4, dadurch gekennzeichnet, daß die keramisch beschichtete Trägerfolie 8 bis 50 µm dick ist.

6. Mehrschichtige Sauerstoffbarrierefolie nach einem oder mehreren der Ansprüche 1 bis 5, dadurch gekennzeichnet, daß die keramisch beschichtete Trägerfolie eine O₂-Permeabilität von kleiner 2 cm³/m² x 24 h x bar, gemessen bei 20 °C und einer relativen Feuchte von 100 %.

7. Kunststoffrohr mit einem den Rohrumfang allseitig umgebenden Mantel, dadurch gekennzeichnet, daß der Mantel eine mehrschichtige Sauerstoffbarrierefolie gemäß einem oder mehreren der Ansprüche 1 bis 6 ist.

8. Kunststoffrohr nach Anspruch 7, dadurch gekennzeichnet, daß der Mantel aus einem Hohlzylinderkörper besteht, der aus einem rechteckigen Folienlaminatzuschnitt aufgebaut ist und der einen geraden, längsaxialen Schlitz in Form eines geraden Überlappungsbereichs besitzt.

9. Kunststoffrohr nach Anspruch 7, dadurch gekennzeichnet, daß der Mantel aus über die gesamte Länge der Umfangsfläche des Rohres spiralig überlappend gewickeltem Folienband besteht.

10. Kunststoffrohr nach einem oder mehreren der Ansprüche 7 bis 9, dadurch gekennzeichnet, daß das vom Mantel umgebene Rohr aus vernetztem Polyethylen besteht.

11. Verwendung einer mehrschichtigen Sauerstoffbarrierefolie nach einem oder mehreren der Ansprüche 1 bis 6 zur Herstellung von Kunststoffrohren, die für den Heizungsbau geeignet sind.

12. Verwendung eines Kunststoffrohres nach einem oder mehreren der Ansprüche 7 bis 10 als Heizungsrohr.
